# EUROPEAN PATENT APPLICATION

(11) **EP 2 127 801 A1**
(43) Date of publication of application: **02.12.2009**
(21) Application number: 07715000.1
(22) Date of filing: 27.02.2007
(51) Int. Cl.: B23Q 3/06

(54) **CLAMP**

(71) Applicant: OKS Co., Ltd., Tokyo, 120-0015 (JP)
(72) Inventor: OKANDA, Satoshi, Tokyo 120-0015 (JP)
(74) Representative: WSL Patentanwälte
(86) International application number: PCT/JP2007/053657
(87) International publication number: WO 2008/120284

(57) **Abstract**

[PROBLEMS] To provide a clamp which can enhance machining precision of a work by suppressing generation of chatter vibration when the work is machined by means of a machine tool.

[MEANS FOR SOLVING PROBLEMS] The clamp (8) is provided with abutting devices (9) for clamping a work (2) when it is machined by means of a machine tool. The abutting device (9) comprises a plurality of portions (14) abutting against the surface of the work (2), a press-urging means (16) for press-urging the plurality of abutting portions (14) toward the work (2), and a means (17) secured to the body of the clamp (8) and moving in the same direction as the press-urging direction of the press-urging means (16) when the plurality of abutting portions (14) abut against the work (2) to stop at the position kept abutting against the work (2) so as to prevent retraction of the abutting portions (14) by utilizing noncompressive fluid.

## Description

### TECHNICAL FIELD

The present invention relates to a clamp device having contact devices for clamping a machining object when the machining object is machined with a machine tool.

### BACKGROUND ART

In conventional practice, in a clamp device for clamping a machining object when the machining object is machined with a machine tool, the machining object is disposed between a pair of tightening members (contact devices), a rotary member is provided having a normal thread portion and an inverse thread portion formed corresponding to the respective tightening members, and the rotary member is rotated in one direction, thereby causing the normal thread portion and the inverse thread portion to move the tightening members in a direction of tightening the machining object (for example, see Patent Document 1).

Patent Document 1: Japanese Laid-open Patent Application No. 2003-127042 (Page 3, FIG. 1)

### DISCLOSURE OF THE INVENTION

### [Problems to Be Solved by the Invention]

However, in cases in which vibration acting on a machining object from a tool during machining with the machine tool coincides with the natural vibration frequency of the machining object, or in cases in which the machining object has a thin shape and low rigidity and is readily deformed, tiny vibrations known as chatter vibrations occur in the machining object. In the clamp device disclosed in Patent Document 1, the machining object is merely clamped and fixed in place by the tightening members (contact devices). Therefore, the natural vibration frequency of the machining object or the chatter vibration occurring due to the low rigidity of the machining object cannot be sufficiently suppressed, and a problem is encountered in that the machining object is machined by the machine tool with less precision.

The present invention was designed in view of such problems, and an object thereof is to provide a clamp device whereby the occurrence of chatter vibrations can be suppressed and a machining object can be machined with greater precision when the machining object is machined with a machine tool.

### [Means for Solving These Problems]

In order to resolve the problems previously described, the clamp device according to a first aspect of the present invention is a clamp device having contact devices for clamping a machining object when the machining object is machined by a machining tool, wherein the clamp device is characterized in the contact devices comprising:
a plurality of contact parts for making contact with a surface of the machining object;
press urging means for urging the contact parts to press against the machining object; and
retraction-preventing means for moving in the same direction as the press urging direction of the press urging means when the contact parts have made contact with the machining object, and stopping in positions of contact with the machining object so as to prevent the contact parts from retracting, the retraction-preventing means being fixed to the main body of the clamp device and using a non-compressible fluid.
In accordance with this aspect, the structure is such that when the machining object is fixed using a machine tool, the contact parts are urged by the press urging means to press against the surface of the machining object to complete the positioning of the object, and the object in this state is integrated and fixed in place so as not to retract by the retraction-preventing means fixed to the main body of the clamp device; therefore, the machining object is integrated with the retraction-preventing means and the main body of the clamp device. Not only is the natural vibration frequency of the machining object itself changed to the natural vibration frequency of the entire clamp device, but the machining object becomes more rigid, chatter vibration in the machining object is suppressed, and the machining object can be machined by the machine tool with greater precision.

The clamp device according to a second aspect of the present invention is the clamp device according to the first aspect, **characterized in that** the press urging means for urging the contact parts to press against the machining object uses a compressible fluid.
In accordance with this aspect, a buffering effect is created by the compressible fluid while the contact parts are kept in a state of contact against the machining object by the compressible fluid, and chatter vibration transmitted from the contact parts is readily absorbed by the compressible fluid of the press urging means.

The clamp device according to a third aspect of the present invention is the clamp device according to the second aspect, **characterized in that** the distance between the press urging means and the contact parts is less than the distance between the retraction-preventing means and the contact parts.
In accordance with this aspect, chatter vibration in the machining object transmitted from the contact parts can be absorbed by the press urging means before being transmitted to the retraction-preventing means, and chatter vibration is impeded from being transmitted to the retraction-preventing means.

The clamp device according to a fourth aspect of the present invention is the clamp device according to any of the first through third aspects, **characterized in that** the press urging means and the retraction-preventing means are formed for the contact parts via pivoted link members.
In accordance with this aspect, chatter vibration is transmitted to link members capable of axial rocking motion, and the chatter vibration is converted to the rocking motion of the link members, whereby the chatter vibration is impeded from being transmitted to the retraction-preventing means.

### BRIEF DESCRIPTION OF THE DRAWINGS

FIG. 1 is a perspective view showing a jig apparatus to which the clamp device in Example 1 is applied;
FIG. 2 is a longitudinal cross-sectional front view along line A-A of the clamp device in FIG. 1;
FIG. 3 is a longitudinal cross-sectional side view along line B-B of the clamp device in FIG. 2;
FIG. 4 is a longitudinal cross-sectional front view showing a pressure cylinder device;
FIG. 5 is a longitudinal cross-sectional front view showing a fixed cylinder device;
FIG. 6 is a conceptual front view showing the clamp device before a workpiece is fixed;
FIG. 7 is a conceptual front view showing the clamp device as having a workpiece fixed;
FIG. 8 is a conceptual plan view showing the clamp device;
FIG. 9 is a conceptual plan view showing the clamp device in Example 2;
FIG. 10 is a conceptual plan view showing the clamp device in Example 3;
FIG. 11 is a conceptual plan view showing the clamp device in Example 4;
FIG. 12 is a conceptual front view showing the clamp device in Example 5; and
FIG. 13 is a conceptual front view showing a clamp device as having fixed a workpiece in place.

### KEY

- 1: Jig apparatus
- 2, 2b: Workpiece (machining object)
- 2c, 2d: Workpiece (machining object)
- 8, 8a, 8b: Clamp device
- 8c, 8d: Clamp device
- 9, 9d: Contact device
- 11: Shaft
- 12, 12d: Link member
- 14: Contact part
- 15: Casing (clamp device main body)
- 16, 16a: Pressure cylinder device (press urging means)
- 17: Fixed cylinder device (retraction-preventing means)

### BEST MODE FOR CARRYING OUT THE INVENTION

The best mode for implementing the clamp device according to the present invention is described hereinbelow based on examples.

### EXAMPLE 1

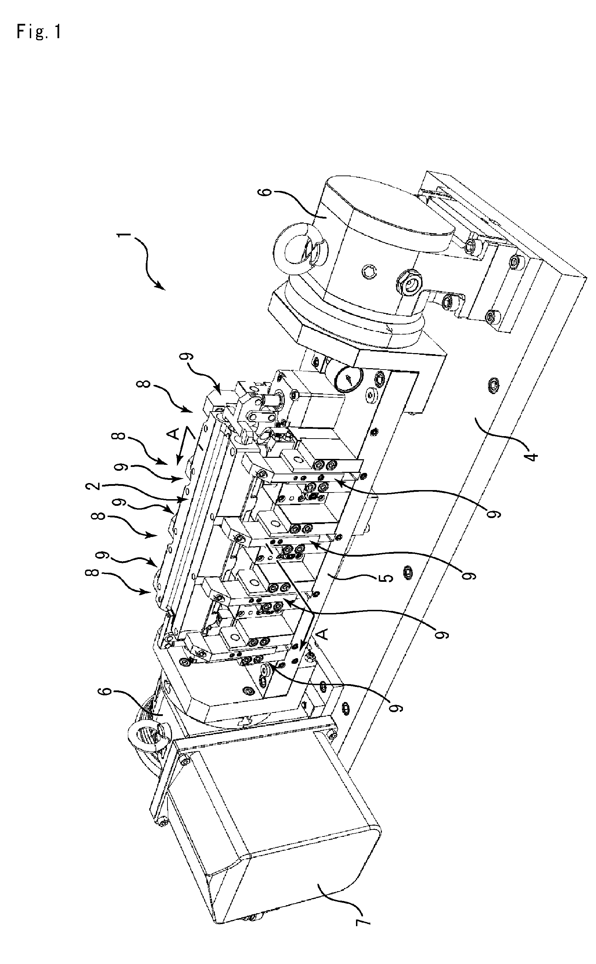

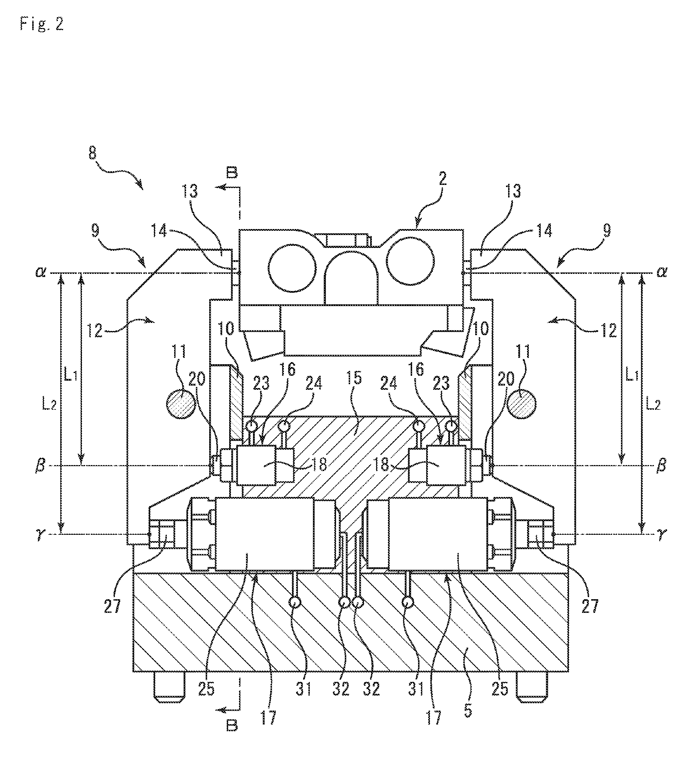

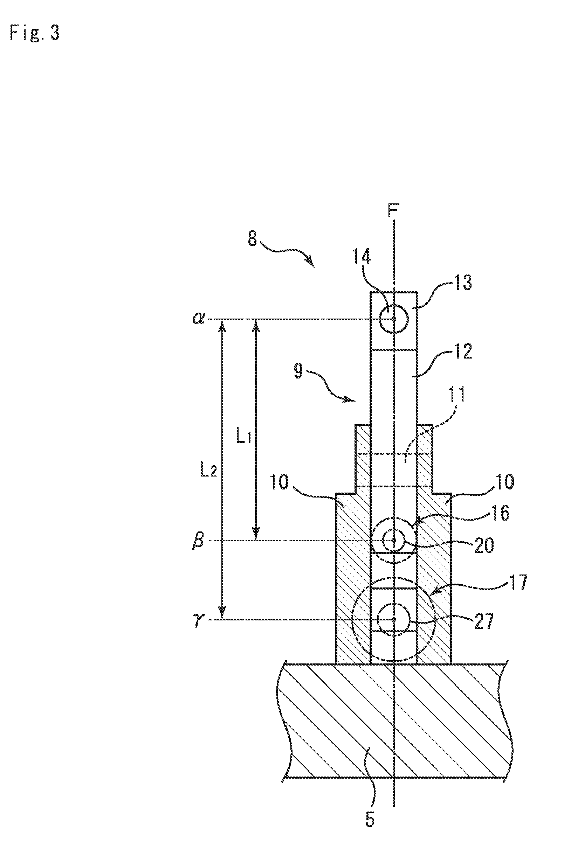

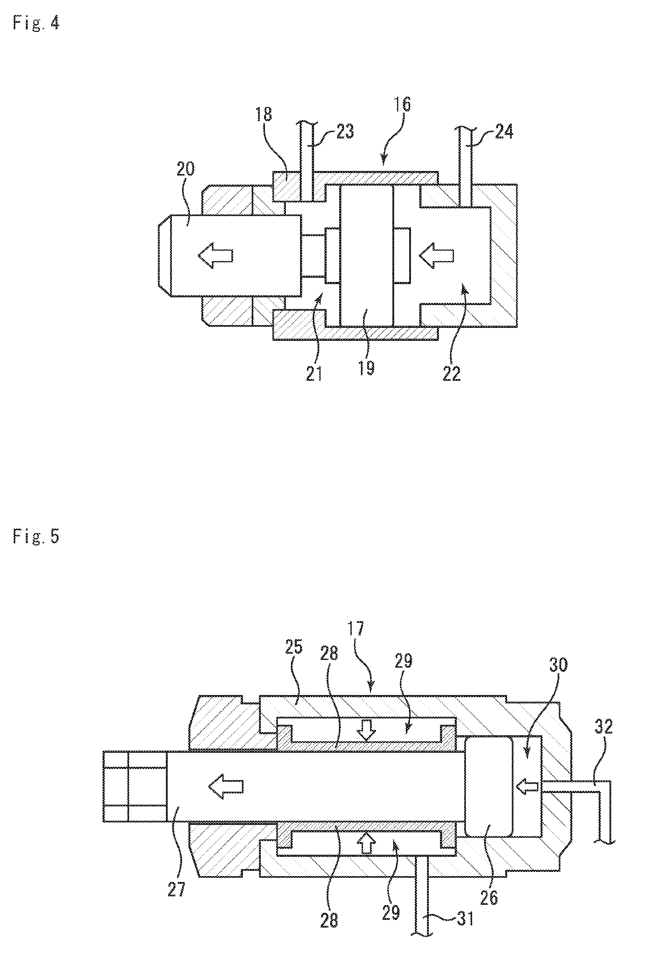

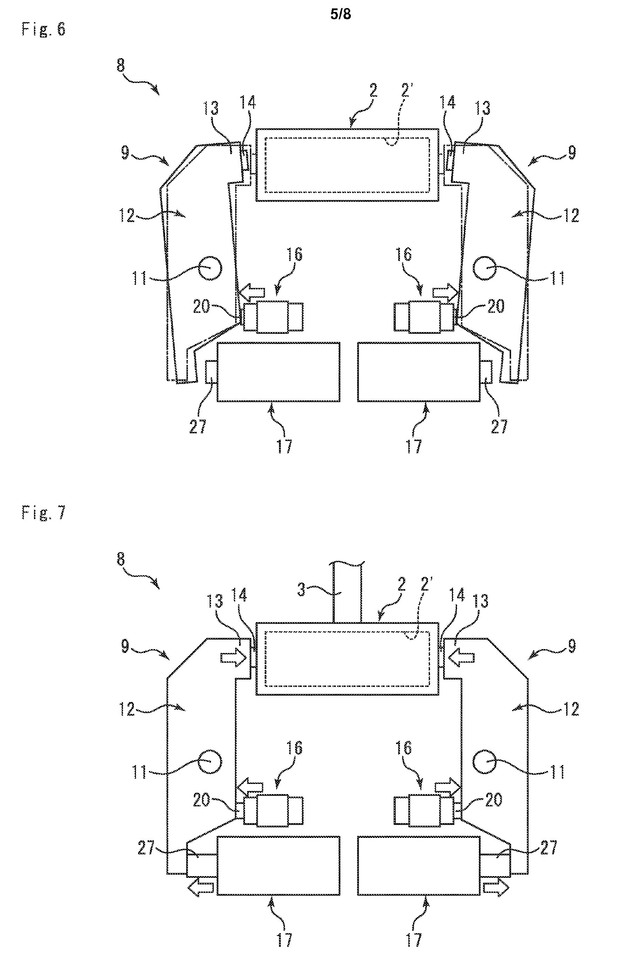

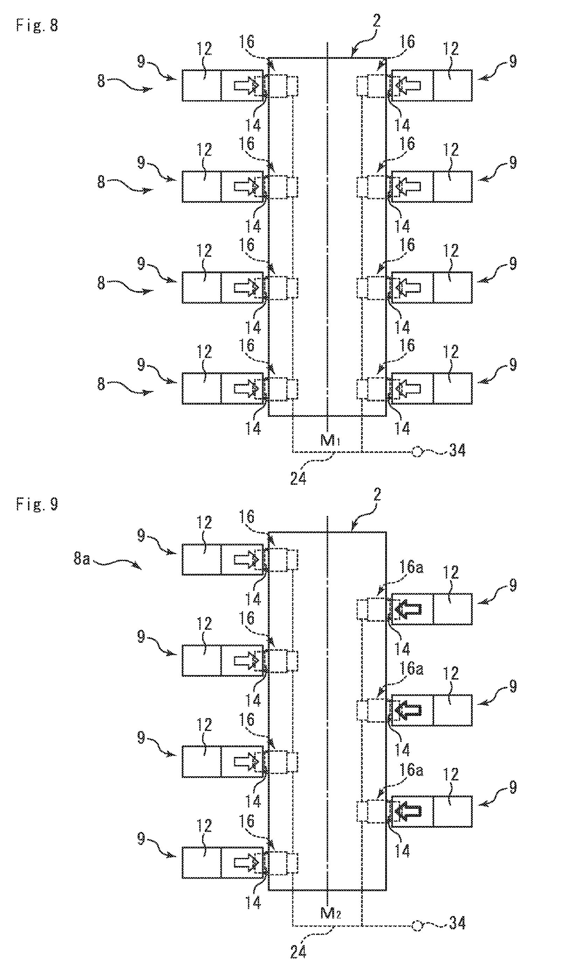

In describing the examples of the present invention on the basis of the drawings, first, FIG. 1 is a perspective view showing a jig apparatus to which the clamp device in Example 1 is applied, FIG. 2 is a longitudinal cross-sectional front view along line A-A of the clamp device in FIG. 1, FIG. 3 is a longitudinal cross-sectional side view along line B-B of the clamp device in FIG. 2, FIG. 4 is a longitudinal cross-sectional front view showing a pressure cylinder device, FIG. 5 is a longitudinal cross-sectional front view showing a fixed cylinder device, FIG. 6 is a conceptual front view showing the clamp device before a workpiece is fixed, FIG. 7 is a conceptual front view showing the clamp device as having a workpiece fixed, and FIG. 8 is a conceptual plan view showing the clamp device. In the descriptions hereinbelow, the right side of the drawing in FIG. 1 is referred to as the front side (forward side) of the jig apparatus and clamp device, the left side of the drawing in FIG. 3 is referred to as the front side (forward side) of the clamp device, and the bottom side of the drawing in FIG. 8 is referred to as the front side (forward side) of the clamp device.

The numerical symbol 1 in FIG. 1 indicates a jig apparatus used in an NC machine tool. This jig apparatus 1 is used in order to hold a workpiece 2 when the workpiece 2 as a machining object is machined in the present example using the NC machine tool. In the NC machine tool (not shown) according to the present example, the position of a tool 3 (see FIG. 7) and the position of the workpiece 2 held by the jig apparatus 1 are defined by coordinate values, and a control device (not shown) changes the position of the tool 3 and the position of the jig apparatus 1 on the basis of positional information. In other words, the machine tool has a numerical control system in which control of the relative positions of the tool 3 and workpiece 2 is automated by the control device.

The jig apparatus 1 is provided with a base 4 fixed to a workbench (not shown) or the like installed inside the NC machine tool. The longitudinal ends on the top surface of the base 4 are provided with turning gear devices 6 for supporting a jig table 5 disposed above the base 4 so as to allow the jig table 5 to turn vertically, as shown in FIG. 1. The turning gear device 6 disposed at the back is provided with a drive motor 7 for turning the jig table 5 in an arbitrary direction via the turning gear device 6.

The top surface of the jig table 5 is provided with four clamp devices 8 disposed at equal intervals in the longitudinal direction. One clamp device 8 is configured from a pair of contact devices 9 disposed to the left and right of the jig table 5 via the workpiece 2. The workpiece 2 used in the present example has a substantially rectangular shape in a plan view (see FIG. 8), and the plurality of contact devices 9 make contact with the workpiece 2 and clamp the workpiece on both the left and right side surfaces.

Next, to describe the clamp device 8 in detail, a clamp device 8 has the previously described contact devices 9 disposed to the left and right of the jig table 5, as shown in FIGS. 2 and 3. The contact devices 9 are provided with link members 12 pivoted so as swing vertically on shafts 11 provided to standing members 10 erected on the jig table 5.

The link members 12 have roughly L shapes having curved parts 13 at the top that curve toward the workpiece 2. Contact parts 14 that make contact with the surface of the workpiece 2 are provided at the distal ends of the curved parts 13. The link members 12 are capable of rocking in a direction in which the contact parts 14 make contact with the surface of the workpiece 2, and also in a direction in which the contact parts 14 separate from the surface of the workpiece 2.

A casing 15 as the clamp device main body in the present example is provided between the standing members 10 in the jig table 5, and the casing 15 is fixed to the jig table 5. Disposed inside the casing 15 are pressure cylinder devices 16 as press urging means in the present example, and fixing cylinder devices 17 as retraction-preventing means in the present example.

The pressure cylinder devices 16 have cylinders 18 fixed to the previously described casing 15, pistons 19 provided so as to be capable of sliding left and right inside the cylinders 18, and pressing rods 20 fixed to the pistons 19, as shown in FIG. 4.

The pressure cylinder devices 16 are piston mechanisms capable of being moved by compressed air (compressible fluid), wherein first air chambers 21 and second air chambers 22 separated via the pistons 19 are provided inside the cylinders 18 of the pressure cylinder devices 16, and air supply tubes 23, 24 for supplying compressed air as a gas to the first air chambers 21 and second air chambers 22 are connected to the cylinders 18. The amount of compressed air supplied to the interiors of the cylinders 18 of the pressure cylinder devices 16 is controlled by a control device (not shown).

The air supply tubes 23, 24 can supply compressed air respectively to the first air chambers 21 and the second air chambers 22 on the basis of the control of the control device (not shown). Compressed air is supplied from the air supply tubes 24 to the second air chambers 22 of the cylinders 18 to raise the air pressure in the second air chambers 22, whereby the pressing rods 20 extend in the direction of contact with the link members 12, and compressed air is supplied from the air supply tubes 23 to the first air chambers 21 of the cylinders 18 to raise the air pressure in the first air chambers 21, whereby the pressing rods 20 retract in the direction of separating from the link members 12.

The air supply tubes 24 for supplying compressed air to the second air chambers 22 in all of the pressure cylinder devices 16 are connected to the same compressed air source 34, as shown in FIG. 8. Therefore, it is easy to achieve control whereby the pressing rods 20 of all of the pressure cylinder devices 16 are simultaneously extended in the direction of contact with the link members 12, and a balance is achieved in the urging pressure of the contact parts 14 in contact with the left and right sides of the workpiece 2 via the link members 12.

Furthermore, the pressure surface areas on the sides of the pistons 19 facing the second air chambers 22 in all of the pressure cylinder devices 16 are equal to each other, and the pressing rods 20 can be moved under the same urging pressure by the compressed air of equal pressure supplied from the compressed air source 34.

The fixing cylinder devices 17 have cylinders 25 fixed to the previously described casing 15, pistons 26 provided so as to be capable of sliding left and right inside the cylinders 25, fixing rods 27 fixed to the pistons 26, and internal wall members 28 disposed so as to clamp the fixing rods 27 from above and below, as shown in FIG. 5.

Also formed inside the cylinders 25 of the fixing cylinder devices 17 are first oil chambers 29 formed above and below the fixing rods 27, and second oil chambers 30 in which the pistons 26 are disposed. Furthermore, oil supply tubes 31, 32 for supplying oil as a liquid (non-compressible fluid) respectively to the first oil chambers 29 and second oil chambers 30 are connected to the cylinders 25. The amount of oil supplied into the cylinders 25 of the fixing cylinder devices 17 is controlled by a control device (not shown).

The oil supply tubes 31, 32 can supply oil respectively to the first oil chambers 29 and second oil chambers 30 on the basis of the control of the control device (not shown). Oil is supplied from the oil supply tubes 32 to the second oil chambers 30 of the cylinders 25 to raise the oil pressure in the second oil chambers 30, whereby the fixing rods 27 extend in the direction of contact with the link members 12, and the oil is discharged from the second oil chambers 30 of the cylinders 25 to lower the oil pressure in the second oil chambers 30, whereby the fixing rods 27 retract in the direction of separating from the link members 12.

The previously described internal wall members 28 are disposed within the first oil chambers 29 of the cylinders 25. When oil is supplied to the first oil chambers 29 from the oil supply tubes 31 and the pressure of the oil supplied into the first oil chambers 29 is raised based on the control of the control device (not shown), the internal wall members 28 clamp the fixing rods 27 from above and below, and the internal wall members 28 are fixed in place so as not to move to the left and right.

In a state in which the pressure of the oil supplied into the first oil chambers 29 has been lowered, i.e., a state in which the fixing rods 27 are not fixed in place by the internal wall members 28 on the basis of the control of the control device (not shown), the pistons 26 are moved in a direction of causing the fixing rods 27 to protrude out of the cylinders 25 when the pressure of the oil supplied to the second oil chambers 30 is raised. When the pressure of the oil supplied to the second oil chambers 30 is lowered, the pistons 26 are moved in a direction of withdrawing the fixing rods 27 back into the cylinders 25.

The pressure cylinder devices 16 and the fixing cylinder devices 17 are disposed inside the casing 15 so that the pressing rods 20 and fixing rods 27 face the link members 12, and the cylinder devices are also disposed so that the pressing rods 20 and fixing rods 27 make contact below the shafts 11 in the link members 12, as shown in FIG. 2.

The pressing positions β where the pressing rods 20 of the pressure cylinder devices 16 pressingly urge the link members 12 from the contact positions α of the contact parts 14, as well as the engaging positions γ where the fixing rods 27 of the fixing cylinder devices 17 engage the link members 12 from the contact positions α of the contact parts 14, are disposed within a plane F which is perpendicular relative to the contact positions α of the contact parts 14, as shown in FIG. 3. This prevents situations in which the force applied to the link members 12 by the pressure cylinder devices 16 and fixing cylinder devices 17 causes the link members 12 to twist or the stress or the like in the link members 12 to change erratically, causing the stress applied to the workpiece 2 from the link members 12 to change erratically as well.

When the workpiece 2 is clamped using the contact devices 9 disposed to the left and right, first, the air pressure in the second air chambers 22 of the pressure cylinder devices 16 is raised to a predetermined level on the basis of the control of the control device (not shown), and the pressing rods 20 of the pressure cylinder devices 16 are moved toward the link members 12, as shown in FIG. 4.

The distal ends of the pressing rods 20 make contact with the link members 12, as shown in FIG. 6. In this state, when the link members 12 continue to be pressingly urged with a predetermined urging pressure by the pressing rods 20, the link members 12 are swung in a direction in which the contact parts 14 approach the workpiece 2. When the contact parts 14 of the link members 12 make contact with the workpiece 2, the link members 12 stop performing a rocking motion. After the link members 12 have stopped performing the rocking motion, the air pressure in the second air chambers 22 of the pressure cylinder devices 16 is kept at a predetermined level, and the pressing rods 20 continue to pressingly urge the link members 12 with a predetermined urging pressure.

After the link members 12 have stopped performing a rocking motion, the oil pressure in the second oil chambers 30 of the fixing cylinder devices 17 is raised to a predetermined level on the basis of the control of the control device (not shown), and the fixing rods 27 of the fixing cylinder devices 17 are moved toward the link members 12, as shown in FIG. 5.

When the distal ends of the fixing rods 27 make contact with (engage) the link members 12 as shown in FIG. 7, the fixing rods 27 stop moving. In this state, the control device (not shown) raises the pressure of the oil supplied into the first oil chambers 29, causing the fixing rods 27 to be clamped from above and below by the internal wall members 28, and the fixing rods 27 to be fixed in place so as to be unable to move to the left and right (see FIG. 5).

The control device (not shown) is designed to determine that the fixing rods 27 have made contact with the link members 12 on the basis of a signal from a detection sensor (not shown) for detecting the oil pressure in the second oil chambers 30, and to be able to arbitrarily control the timing with which the oil pressure of the first oil chambers 29 is raised. Furthermore, pressure sensors or the like may be provided to the distal ends of the fixing rods 27 so that the control device can determine that the fixing rods 27 have made contact with the link members 12.

The control device (not shown) also ensures that the air pressure in the second air chambers 22 of the pressure cylinder devices 16 can be constantly kept at a predetermined level, and that the pressing rods 20 can maintain a predetermined urging pressure, without detecting that the pressing rods 20 have made contact with the link members 12 or that the contact parts 14 of the link members 12 have made contact with the workpiece 2 and stopped the link members 12 from performing a rocking motion.

The urging pressure with which the pressing rods 20 of the pressure cylinder devices 16 pressingly urge the link members 12 is less than the engaging force with which the fixing rods 27 of the fixing cylinder devices 17 engage the link members 12.

The link members 12 are engaged by the fixing rods 27 of the fixing cylinder devices 17, and the link members 12 are prevented from performing a rocking motion in the direction in which the contact parts 14 of the link members 12 separate from the surface of the workpiece 2. The pressing rods 20 of the pressure cylinder devices 16 urge the link members 12 in a rocking direction in which the contact parts 14 of the link members 12 press against the surface of the workpiece 2; the urging pressure of the contact parts 14 causes a predetermined amount of stress to act on the interior of the workpiece 2; the natural vibration frequency of the workpiece 2 increases; and the workpiece 2 becomes more rigid. The workpiece 2 is clamped by the link members 12 while the workpiece 2 is pressed by the pressure cylinder devices 16 via the link members 12, whereby the workpiece 2, the link members 12, and the fixing cylinder devices 17 operate as if in an integrated manner.

The contact devices 9 are disposed at equal intervals to the left and right of the workpiece 2 as seen in a plan view, and four contact devices 9 are disposed on both the left and right sides each of the workpiece 2, as shown in FIG. 8. The pressing directions of the contact parts 14 of the contact devices 9 on both the left and right sides face toward a substantially central position M₁ between the contact parts 14 in the workpiece 2, and the pressing direction of one contact device 9 on the left side is opposite the pressing direction of one contact device 9 on the right side. Therefore, the urging pressure applied to the workpiece 2 by the contact parts 14 of a pair of left and right contact devices 9 is balanced via the workpiece 2, and the urging pressure from the pressure cylinder devices 16 can be easily balanced.

Thus, the urging pressure from the pressure cylinder devices 16 is transmitted via the link members 12 to the workpiece 2, which is clamped and fixed in place from the left and right by the link members 12, creating a state in which a predetermined amount of stress acts on the interior of the workpiece 2. In this state, the tool 3 of the machine tool is brought into contact with the workpiece 2, and the operation of machining the workpiece 2 is started.

The workpiece 2, the link members 12, and the fixing cylinder devices 17 operate as if in an integrated manner, as shown in FIG. 7. Since the pressing rods 20 of the pressure cylinder devices 16 apply a predetermined urging pressure to the link members 12 in this state, the chatter vibration that occurs in the workpiece 2 is absorbed by the pressure cylinder devices 16.

Since the pressure cylinder devices 16 are piston mechanisms that use compressed air as a highly compressible (widely fluctuating density) fluid (gas fluid), the chatter vibration transmitted from the contact parts 14 of the link members 12 is easily absorbed by the compressed air inside the pressure cylinder devices 16 (piston mechanisms).

Furthermore, the fixing cylinder devices 17 move and fix the fixing rods 27 by using oil as a non-compressible fluid (liquid fluid) having low compressibility (little change in density). Therefore, the force with which the fixing rods 27 engage the link members 12 can be increased; the workpiece 2, the link members 12, and the fixing cylinder devices 17 can act as strong integrated members; and rigidity can be increased to absorb chatter vibration.

As previously described, the contact parts 14 which make contact with the workpiece 2 are provided to the swingably pivoted link members 12, the pressure cylinder devices 16 pressingly urge the link members 12 so as to swing the link members 12 in one rocking direction, and the fixing cylinder devices 17 engage the link members 12 swung by the pressure cylinder devices 16 to prevent the link members 12 from performing a rocking motion in the other rocking direction, whereby any chatter vibration transmitted from the contact parts 14 is transmitted to the link members 12 capable of rocking around the shafts 11, and the chatter vibration is converted into a rocking motion of the link members 12 and is thereby impeded from being transmitted to the fixing cylinder devices 17.

The link members 12 are capable of vibrating so as to swing around the shafts 11, and the urging pressure from the pressure cylinder devices 16 is added to the vibration of the link members 12, thus opposing the chatter vibration of the workpiece 2 and suppressing the chatter vibration. When the chatter vibration causes a force to act from the workpiece 2 on the contact parts in an attempt to retract the contact parts 14, this force is dispersed to the shafts of the link members 12 and the fixing cylinder devices 17, and the fixing cylinder devices 17 can readily oppose the force acting to retract the contact parts 14.

The distance L₁ from the contact positions α of the contact parts 14 to the pressing positions β where the pressing rods 20 of the pressure cylinder devices 16 pressingly urge the link members 12 is less than the distance L₂ from the contact positions α of the contact parts 14 to the engaging positions γ where the fixing rods 27 of the fixing cylinder devices 17 engage the link members 12, as shown in FIGS. 2 and 3. The chatter vibration of the workpiece 2 transmitted from the contact parts 14 via the link members 12 is thereby absorbed by the pressure cylinder devices 16 before being transmitted to the fixing cylinder devices 17, the chatter vibration is impeded from being transmitted to the engaged state of the fixing cylinder devices 17, and a structure is maintained in which the workpiece 2, the link members 12, and the fixing cylinder devices 17 operate as if in an integrated manner.

The clamp device 8 of the present invention as described above is configured so that when the workpiece 2 is fixed using a machine tool, the contact parts 14 are urged by the pressure cylinder devices 16 to press against the surface of the workpiece 2 to complete the positioning of the workpiece, and the workpiece 2 in this state is integrated and fixed in place in a non-retractable state by the fixing cylinder devices 17 fixed to the main body of the clamp device 9 (*1). Therefore, the workpiece 2 is integrated with the fixing cylinder devices 17 and the main body of the clamp device 8. Not only does the natural vibration frequency of the workpiece 2 as such convert to the natural vibration frequency of the entire clamp device 8, but the workpiece 2 becomes more rigid, chatter vibration in the workpiece 2 is suppressed, and the workpiece 2 can be machined by the machine tool with greater precision.

The pressure cylinder devices 16 use compressed air as a compressible fluid, whereby the contact parts 14 are kept in a state of contact with the workpiece 2, the compressed air creates a buffering effect, and any chatter vibration transmitted from the contact parts 14 is readily absorbed by the compressible air in the pressure cylinder devices 16.

When chatter vibration occurs in the workpiece 2, the pressure cylinder devices 16 continue to press against the link members 12 even if the workpiece 2 bends so that the transverse width of the workpiece 2 decreases on a microscopic scale, or the surface where the contact parts 14 are in contact with the workpiece 2 bends in a direction away from the contact parts 14, whereby the contact parts 14 can be moved while following the surface of the workpiece 2, the contact parts 14 continue to be urged to press against the surface of the workpiece 2, and a state in which stress is applied to the interior of the workpiece 2 can be maintained.

In cases in which a cavity 2' is formed inside the workpiece 2 as shown in FIGS. 6 and 7, and the workpiece 2 is a thin, readily deformable member of low rigidity, using the clamp device 8 of the present example allows chatter vibration to be suppressed while the workpiece 2 is clamped with a force that is sufficiently weak to not deform the thin workpiece 2, and the workpiece 2 can be machined by a machine tool with greater precision even when machining a workpiece 2 that has been made thinner in order to reduce weight, or a workpiece 2 formed from a material of low rigidity.

### EXAMPLE 2

Next, a clamp device 8a according to Example 2 will be described with reference to FIG. 9. Structural components identical to the structural components shown in the previous example are denoted by the same numerical symbols and are not described to prevent redundancy. FIG. 9 is a conceptual plan view showing the clamp device 8a in Example 2. The following description is made on the assumption that the bottom side of the drawing in FIG. 9 is the front side (forward side) of the clamp device 8a.

Contact devices 9 of the clamp device 8a in Example 2 are disposed so as to be staggered relative to each other to the left and right of a rectangular workpiece 2 in a plan view, and contact parts 14 of link members 12 make contact with the workpiece 2, as shown in FIG. 9. In other words, the pressing direction of the right-side contact devices 9 is disposed so as to be directed to a point between adjacent contact devices 9 on the left side, and the pressing directions of the contact devices 9 on both sides are directed toward a substantially central position M₂ between pairs of the contact parts 14 in the workpiece 2.

In Example 2, four contact devices 9 are disposed on the left side, and three contact devices 9 are disposed on the right side. Connected to the same compressed air source 34 are air supply tubes 24 for supplying compressed air to second air chambers 22 (see FIG. 4) in the pressure cylinder devices 16 in the four left-side contact devices 9 and in the pressure cylinder devices 16a in the three right-side contact devices 9. Therefore, the pressing rods 20 (see FIG. 4) of all the pressure cylinder devices 16, 16a simultaneously extend in a direction of contact with the link members 12, and control can easily be implemented so as to achieve a balance in the urging pressure of the contact parts 14 in contact with the left and right sides of the workpiece 2 via the link members 12.

Furthermore, the pressure surface areas on the sides of the pistons 19 (see FIG. 4) facing the second air chambers 22 in all the pressure cylinder devices 16a disposed on the right side are formed slightly larger than the pressure surface areas on the sides of the pistons 19 facing the second air chambers 22 in all the pressure cylinder devices 16 disposed on the left side. Therefore, the urging pressure of one contact device 9 disposed on the right side is slightly greater than the urging pressure of one contact device 9 disposed on the left side, and the combined urging pressure of the four contact devices 9 on the left side is in balance with the combined urging pressure of the three contact devices 9 on the right side via the workpiece 2.

### EXAMPLE 3

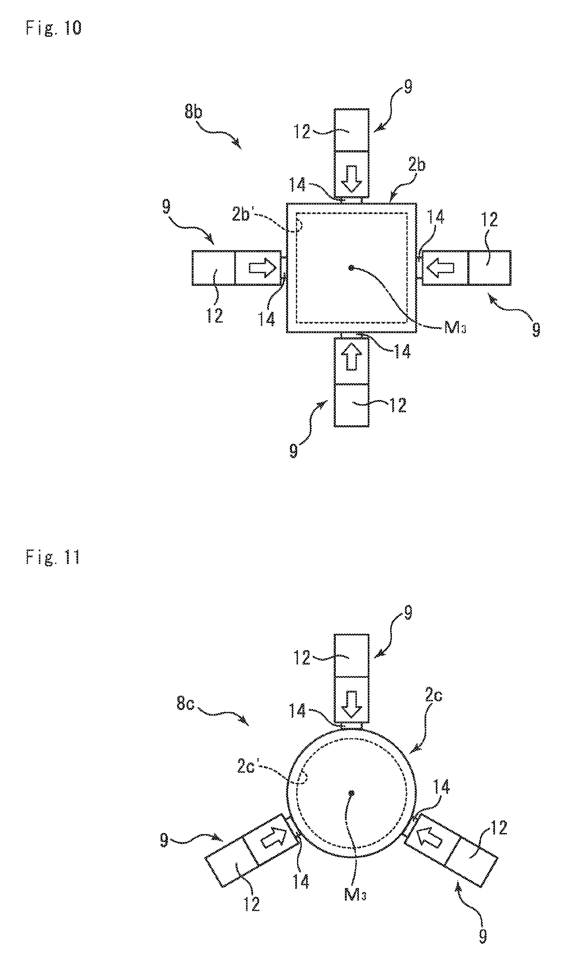

Next, a clamp device 8b according to Example 3 will be described with reference to FIG. 10. Structural components identical to the structural components shown in the previous examples are denoted by the same numerical symbols and are not described to prevent redundancy. FIG. 10 is a conceptual plan view showing the clamp device 8b in Example 3. The following description is made on the assumption that the bottom side of the drawing in FIG. 10 is the front side (forward side) of the clamp device 8b.

The contact devices 9 of the clamp device 8b in Example 3 are disposed on the front, back, left, and right sides of a workpiece 2b having a square shape in a plan view, and the contact parts 14 of the link members 12 make contact with the workpiece 2b, as shown in FIG. 10. In other words, four contact devices 9 are disposed on the respective four sides of the workpiece 2b, and the respective pressing directions of the contact devices 9 are directed toward a substantially central position M₃ between the contact parts 14 in the workpiece 2b.

In Example 3, the urging pressure of the front-side contact device 9 and the urging pressure of the rear-side contact device 9 are directed mutually opposite each other, the urging pressure of the left-side contact device 9 and the urging pressure of the right-side contact device 9 are directed opposite each other, and the urging pressure of the four contact devices 9 balances out via the workpiece 2b.

A cavity 2b' is formed inside the workpiece 2b as shown in FIG. 10, and chatter vibration can be suppressed while the workpiece 2b is clamped with a force that is sufficiently weak to not deform the thin workpiece even if the workpiece 2b is a thin, easily deformable member of low rigidity.

### EXAMPLE 4

Next, a clamp device 8c according to Example 4 will be described with reference to FIG. 11. Structural components identical to the structural components shown in the previous Examples are denoted by the same numerical symbols and are not described to prevent redundancy. FIG. 11 is a conceptual plan view showing the clamp device 8c in Example 4. The following description is made on the assumption that the bottom side of the drawing in FIG. 11 is the front side (forward side) of the clamp device 8c.

The contact devices 9 of the clamp device 8c in Example 4 are disposed in three locations around the periphery of a workpiece 2c having a circular shape in a plan view, and the contact parts 14 of the link members 12 make contact with the workpiece 2c, as shown in FIG. 11. In other words, three contact devices 9 are disposed around the outer periphery of the workpiece 2c, and the respective pressing directions of the contact devices 9 are directed toward a substantially central position M₄ between the contact parts 14 in the workpiece 2c. In Example 4, the urging pressure of the three contact devices 9 is uniform, and the urging pressure balances out via the workpiece 2c.

A cavity 2c' is formed inside the workpiece 2c as shown in FIG. 11, and chatter vibration can be suppressed while the workpiece 2c is clamped with a force that is sufficiently weak to not deform the thin workpiece 2c even if the workpiece 2c is a thin, easily deformable member of low rigidity.

### EXAMPLE 5

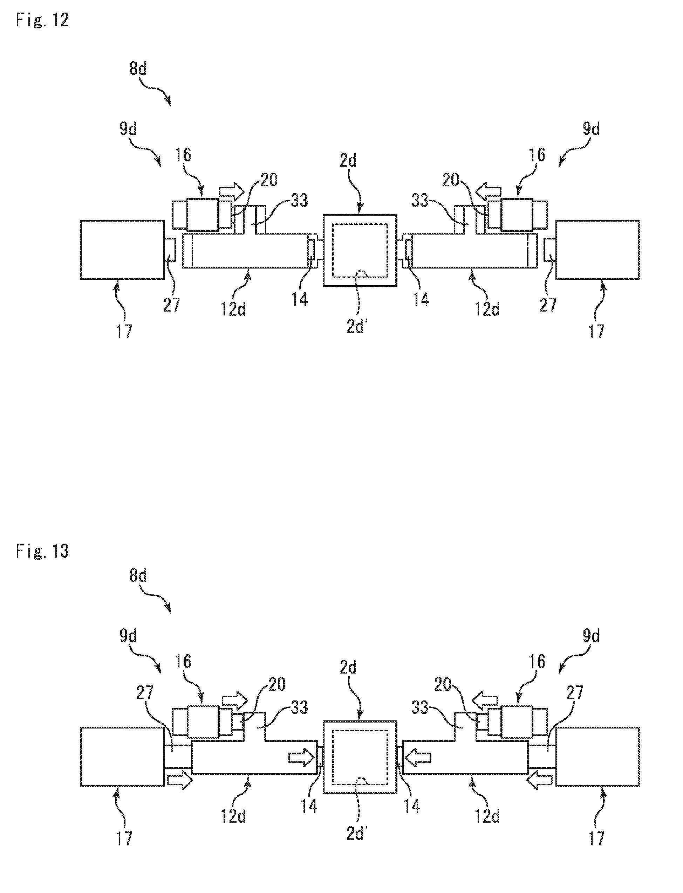

Next, a clamp device 8d according to Example 5 will be described with reference to FIGS. 12 and 13. Structural components identical to the structural components shown in the previous Examples are denoted by the same numerical symbols and are not described to prevent redundancy. FIG. 12 is a conceptual front view showing the clamp device 8d in Example 5, and FIG. 13 is a conceptual front view showing the clamp device 8d as having fixed a workpiece 2d in place.

The clamp device 8d in Example 5 is configured from a pair of left and right contact devices 9d disposed to the left and right of the workpiece 2d, and the contact devices 9d are provided with rod-shaped link members 12d which slide left and right, as shown in FIG. 12. The distal ends of the link members 12d are directed toward the workpiece 2d, and the distal ends are provided with contact parts 14 which make contact with the surface of the workpiece 2d. The link members 12d are capable of sliding in a direction in which the contact parts 14 make contact with the surface of the workpiece 2d and in a direction in which the contact parts separate from the surface of the workpiece 2d.

Fixing cylinder devices 17 are disposed at the proximal ends of the link members 12d, and the distal ends of fixing rods 27 of the fixing cylinder devices 17 are directed toward the link members 12d. Pressed pieces 33 are formed in the top parts of the link members 12d, the pressure cylinder devices 16 are disposed in proximity to the pressed pieces 33, and the distal ends of pressing rods 20 of the pressure cylinder devices 16 are directed toward the pressed pieces 33. The contact directions of the pressing rods 20 and fixing rods 27 in all of the contact devices 9d are the same.

When the workpiece 2d is clamped using the contact devices 9d disposed to the left and right, the pressing rods 20 of the pressure cylinder devices 16 are first moved toward the link members 12d, and the distal ends of the pressing rods 20 are brought into contact with the pressed pieces 33 of the link members 12d, as shown in FIG. 12. When the link members 12d continue to be pressingly urged by the pressing rods 20 with a predetermined urging pressure in this state, the link members 12d are slid in a direction in which the contact parts 14 approach the workpiece 2d. When the contact parts 14 of the link members 12d make contact with the workpiece 2d, the link members 12d stop sliding. The pressing rods 20 of the pressure cylinder devices 16 continue to pressingly urge the link members 12d with a predetermined urging pressure even after the link members 12d have stopped performing a rocking motion.

After the link members 12d have stopped sliding, the fixing rods 27 of the fixing cylinder devices 17 are moved toward the link members 12d, and the fixing rods 27 are fixed so as to be incapable of moving to the left or right while the distal ends of the fixing rods 27 remain in contact (engaged) with the link members 12d, as shown in FIG. 13. As in Example 1, the workpiece 2d is clamped by the link members 12d while the workpiece 2d is pressed by the pressure cylinder devices 16 via the link members 12d, whereby the workpiece 2d, the link members 12d, and the fixing cylinder devices 17 operate as if in an integrated manner.

A cavity 2d' is formed inside the workpiece 2d as shown in FIG. 12, and chatter vibration can be suppressed while the workpiece 2d is clamped with a force that is sufficiently weak to not deform the thin workpiece 2cd even if the workpiece 2d is a thin, easily deformable member of low rigidity.

Examples of the present invention were described above with reference to the drawings, but the specific configuration is not limited to these examples, and the present invention includes modifications and additions within a range that does not deviate from the scope of the present invention.

For example, in the previous examples, the control device (not shown) does not detect that the contact parts 14 of the link members 12 have made contact with the workpiece 2 and the link members 12 have stopped performing a rocking motion, and the control device implements control so that the pressing rods 20 of the pressure cylinder devices 16 can constantly maintain a predetermined urging pressure. However, various sensors may be attached to the contact devices 9 and the workpiece 2, the state of the link members 12 and the state of the workpiece 2 may be detected, and the control device may suitably vary the urging pressure of the pressure cylinder devices 16 on the basis of these detections.

In the previous examples, one application of a machine tool was an NC machine tool, which uses a numerical control system in which the control device (not shown) automatically controls the relative positions of the tool 3 and workpiece 2 on the basis of positional information, such as the location of the tool 3 and the location of the workpiece 2 defined by coordinate values. However, the present invention is not limited to an NC machine tool and can also be applied to a manual machine tool wherein the relative positions of the tool 3 and workpiece 2 are controlled manually.

## Claims

1. A clamp device having contact devices for clamping a machining object when the machining object is machined by a machining tool, wherein the clamp device is **characterized in** said contact devices comprising:
a plurality of contact parts for making contact with a surface of said machining object;
press urging means for urging said contact parts to press against said machining object; and
retraction-preventing means for moving in the same direction as the press urging direction of said press urging means when said contact parts have made contact with the machining object, and stopping in positions of contact with said machining object so as to prevent said contact parts from retracting, the retraction-preventing means being fixed to the main body of the clamp device and using a non-compressible fluid.

2. The clamp device according to claim 1, **characterized in that** said press urging means for urging said contact parts to press against said machining object uses a compressible fluid.

3. The clamp device according to claim 2, **characterized in that** the distance between said press urging means and said contact parts is less than the distance between said retraction-preventing means and said contact parts.

4. The clamp device according to any of claims 1 through 3, **characterized in that** said press urging means and said retraction-preventing means are formed for said contact parts via pivoted link members.
